# EUROPÄISCHE PATENTSCHRIFT

(11) **EP 0 962 755 B1**
(45) Veröffentlichungstag und Bekanntmachung des Hinweises auf die Patenterteilung: **09.02.2005**
(21) Anmeldenummer: 99110493.6
(22) Anmeldetag: 31.05.1999
(51) Int. Cl.: G01M 3/20

(54) **Verfahren und Vorrichtung zur Dichtigkeitsprüfung eines Lampengehäuses**
Procedure and device for leak testing of a lamp holding housing
Procédé et dispositif d'essai d'étanchéité pour boîtier de lampe

(30) Priorität: 04.06.1998 DE 19825025
(43) Veröffentlichungstag der Anmeldung: 08.12.1999
(73) Patentinhaber: SIEMENS AKTIENGESELLSCHAFT, 80333 München (DE)
(72) Erfinder: Loeters, Ghislain, 1702 Grand-Big (BE); Vandevoorde, Jean-Claude, 1820 Steenkokkerzeel (BE)

(56) Entgegenhaltungen:
- EP-A- 0 377 264
- US-A- 3 888 111
- US-A- 4 754 638

## Beschreibung

Verfahren und Prüfstand zur Ermittlung der Dichtigkeit von Unterflurfeuern oder anderen auf Flughäfen oder zur Straßenbeleuchtung eingesetzten abdichtungskritischen Geräten

Die Erfindung bezieht sich auf ein Verfahren und auf einen Prüfstand zur Ermittlung der Dichtigkeit von Unterflurfeuern oder anderen auf Flughäfen oder zur Straßenbeleuchtung eingesetzten abdichtungskritischen Geräten.

Bei der Beleuchtung, der Signalgebung und der Bewegungsüberwachung von Flug- und Fahrzeugen auf Flughäfen werden ständig höhere Anforderungen bezüglich der Betriebssicherheit der dazu eingesetzten Vorrichtungen und Geräte verlangt, um die Sicherheit von Menschen und Material immer besser zu gewährleisten. So werden beispielsweise zur Signalabgabe Unterflurfeuer eingesetzt, deren Betriebssicherheit in hohem Ausmaße von vollständig sauberen Optiken und wasser- sowie dampfdichten Passungen abhängt.

Aus der Patentschrift US 3,888,111 ist ein Verfahren zur Dichtigkeitsprüfung von Lampeneinheiten bekannt, beispielsweise Frontscheinwerfer von Fahrzeugen. Der Innenraum solcher Lampeneinheiten ist mit einer inerten Gasmischung aus Argon und Stickstoff bei leichtem Unterdruck gefüllt, damit im Betrieb der Lampeneinheit der Druck der erhitzten Gasfüllung etwa Atmosphärendruck erreicht. Gemäß dem bekannten Verfahren wird die Lampeneinheit zunächst in eine abgedichtete Kammer gelegt, die anschließend evakuiert wird. Hierdurch wird die Gasfüllung der Lampeneinheit durch etwaige Leckagewege aus dem Innenraum der Lampeneinheit herausgezogen. Zum Nachweis austretenden Gases ist der Gasfüllung eine geringe Menge an Helium als Indikatorgas beigemischt. Die Kammer wird dann mit einem bei niedriger Temperatur kondensierenden Gas, etwa mit Kohlendioxid, gefüllt, welches sich mit dem Leckagegas mischt. In die Kammer wird eine mit einem Massenspektrometer verbundene Sonde eingeführt. Um den Gehalt an in die Kammer ausgeströmtem Helium zu detektieren, wird der Kammer über die Sonde eine Gasprobe entnommen. Nach Durchlaufen einer Kältefalle, in der das Kohlendioxid auskondensiert, wird die Probe dem Massenspektrometer zugeführt.

Die Patentschrift US 4,754,638 offenbart ein Verfahren zur Prüfung der Dichtigkeit von Bauteilen, die einen Innenraum definieren, beispielsweise Radfelgen für Autoreifen. Das zu prüfende Bauteil wird derart in einem Gehäuse angeordnet, das das Bauteil den Innenraum des Gehäuses in eine innere und eine äußere, jeweils abgedichtete Kammer unterteilt. Anschließend wird eine der beiden Kammern mit einem ein Indikatorgas enthaltendes Gasgemisch unter Druck gesetzt. Schließlich wird Indikatorgas, welches von der einen Kammer durch undichte Stellen im Bauteil in die andere dringt, detektiert. Dabei wird diese andere Kammer von einem Gasfluss durchströmt, der gegebenenfalls eingedrungenes Indikatorgas einem Indikatorgas-Sensor zuführt. Die Umgebung des Indikatorgas-Sensors wird einem konstanten Spülgasstrom ausgesetzt, der frei von Indikatorgas ist, um einen Schutzgasschirm gegen die umgebenden Atmosphäre zu bilden.

Der Erfindung liegt die Aufgabe zugrunde, Mittel zur Verfügung zu stellen, mittels derer die Betriebssicherheit von Unterflurfeuern oder anderen abdichtungskritischen Geräten erheblich erhöht werden kann.

Diese Aufgabe wird erfindungsgemäß dadurch gelöst, daß der Innenraum eines Unterflurfeuers oder Geräts einem Unterdruck ausgesetzt wird, daß nach Erreichen eines vorgebbaren Unterdruckniveaus die Umgebung des Unterflurfeuers oder Geräts mit einem Indikatorgas beaufschlagt wird und daß die Menge des in das Unterflurfeuer oder Gerät eindringenden Indikatorgases in Abhängigkeit von der Zeit gemessen wird. So wird jedes zum Einsatz kommende Unterflurfeuer oder Gerät einer Prüfung unterzogen, mittels der exakte Hinweise hinsichtlich seiner Dichtigkeitseigenschaften zur Verfügung gestellt werden. Für die Dichtigkeitseigenschaften jedes Unterflurfeuers oder Geräts werden bestimmte Grenzwerte vorgegeben. Verbleiben die Meßergebnisse innerhalb dieser Grenzwerte, kommt es zum Einsatz des Unterflurfeuers oder Geräts. Weichen die ermittelten Meßergebnisse von dem zulässigen Bereich ab, werden entsprechende Unterflurfeuer bzw. Geräte ausgesondert und kommen nicht zum Einsatz. Darüber hinaus wird bei dem vorstehend geschilderten Prüfverfahren gleichzeitig Restfeuchtigkeit aus den Passungen entfernt, und zwar während der Überprüfung der Dichtigkeit der Passungen. Während dieses Prüfverfahrens herrscht darüber hinaus, wie im späteren Betriebseinsatz, Unterdruck innerhalb der Passungen.

Vorteilhaft wird während des Aufbaus des Unterdrucks eine Entlüftungsöffnung im Gehäuse des Unterflurfeuers oder Geräts geöffnet, so daß dieser Vorgang unabhängig von an dem Unterflurfeuer oder Gerät vorhandenen Undichtigkeiten vergleichsweise schnell durchgeführt werden kann.

Beim Einsatz des erfindungsgemäßen Verfahrens hat sich herausgestellt, daß es zweckmäßig ist, den Unterdruck bis auf ein Niveau von unter ca. 0,01 Torr abzubauen.

Um bei dem Prüfungsverfahren auf der sicheren Seite zu sein, wird vorgeschlagen, als Indikatorgas ein Gas mit einem Molekulardurchmesser einzusetzen, der kleiner ist, als der von Sauerstoff und Wasser. Hierdurch kann verhindert werden, daß im späteren Betriebseinsatz Verhältnisse herrschen, die dahingehend von den während des Prüfverfahrens herrschenden Verhältnissen abweichen, daß im Betriebseinsatz faktisch eine geringere Dichtigkeit vorliegt.

Wenn als Indikatorgas Helium eingesetzt wird, wird erreicht, daß ein unschädliches und inertes Gas vorliegt, welches einen Molekulardurchmesser aufweist, der kleiner als der von Wasser, Sauerstoff oder jedes anderen Mediums ist, welches zur Degenerierung der Passung infolge Korrosion, Oxidation, Ablagerungen auf der optischen Einrichtung etc. beitragen könnte.

Alternativ ist es auch möglich, als Indikatorgas Argon oder N2 einzusetzen.

Zweckmäßigerweise wird das Indikatorgas mit einem vergleichsweise niedrigen Druck, z.B. von ca. 0,3 bar, an das unter Unterdruck gesetzte Unterflurfeuer oder Gerät angelegt.

Zur Ermittlung von Undichtigkeiten des Unterflurfeuers oder Geräts kann die Masse des sich in der Umgebung des Unterflurfeuers oder Geräts befindlichen Indikatorgases in Abhängigkeit von der Zeit erfaßt werden. Sofern diese Masse durch Eindringen von Indikatorgas in das Unterflurfeuer oder Gerät abnimmt, läßt sich diese Verminderung als Maß für die Dichtigkeit des Unterflurfeuers oder Geräts auffassen.

So kann zur Erfassung der Masse des sich in der Umgebung des Unterflurfeuers oder Geräts befindlichen Indikatorgases ein Molekularmassendetektor eingesetzt werden, der vorzugsweise auf die Molekularmasse von Helium eingestellt wird.

Im Rahmen einer Qualitätsprüfung für dem Prüfverfahren unterzogene Unterflurfeuer oder Geräte ist es möglich, bestimmten Unterflurfeuer- oder Gerätetypen bestimmte Grenzwerte für einen Druckabfall des die Umgebung des Unterflurfeuers oder Geräts beaufschlagenden Indikatorgases vorzugeben. Je nach Gerätetyp kann dann am Ende des Prüfverfahrens entschieden werden, ob das Gerät mit der gewünschten Qualität hinsichtlich seiner Dichtigkeit die erforderlichen Betriebskennwerte aufweist oder nicht.

Zur Dokumentierung des Prüfverfahrens ist es möglich, für jedes Unterflurfeuer oder Gerät ein Meßprotokoll bezüglich des Druckabfalls des die Umgebung des Unterflurfeuers oder Geräts beaufschlagenden Indikatorgases zu erstellen. Hierdurch ist für jedes Unterflurfeuer oder Gerät nachweisbar, über welche Dichtigkeitseigenschaften es nach Beendigung des Prüfverfahrens verfügte.

Vorteilhaft kann ein entsprechend überprüftes Unterflurfeuer oder Gerät nach Beendigung des Prüfverfahrens mit Normalluft gefüllt werden, wobei bei einer bevorzugten Ausführungsform des erfindungsgemäßen Verfahrens die in das Innere des Unterflurfeuers oder Geräts eingeführte Normalluft in einem Aktivkohlefilter gereinigt und entfeuchtet wird. Unmittelbar nach der Füllung des Unterflurfeuers oder Geräts kann dann die Entlüftungsschraube in die Entlüftungsöffnung eingedreht werden, woraufhin das Unterflurfeuer oder Gerät zur Auslieferung verpackt wird.

Ein Prüfstand zur Ermittlung der Dichtigkeit von Unterflurfeuern oder anderen auf Flughäfen oder zur Straßenbeleuchtung eingesetzten abdichtungskritischen Geräten hat eine Kammer, in der das Unterflurfeuer oder Gerät aufnehmbar und in die ein Indikatorgas einleitbar ist, eine Pumpe, mittels der der Innenraum des Unterflurfeuers oder Geräts mit Unterdruck beaufschlagbar ist, und einen Druckmesser, mittels dem der Druck innerhalb des Unterflurfeuers oder Geräts erfaßbar ist.

Des weiteren ist es vorteilhaft, wenn der Prüfstand eine Handhabe aufweist, mittels der eine Entlüftungsschraube des Unterflurfeuers oder Geräts, die sich innerhalb der Kammer befindet, aus einer Entlüftungsöffnung im Gehäuse desselben heraus- und in diese hineinschraubbar ist. Hierdurch kann dann für die Phase der Unterdruckbeaufschlagung innerhalb der Kammer die Entlüftungsschraube aus dem Gehäuse bzw. aus der Entlüftungsöffnung des Gehäuses entfernt werden, so daß der Zeitaufwand zur Unterdrucksetzung auch des Inneren des Unterflurfeuers oder Geräts vertretbar kurz ist. Nach Beendigung des Unterdruckaufbaus wird dann die Entlüftungsschraube mittels der Handhabe wieder in die Entlüftungsöffnung eingeschraubt, so daß das Gehäuse die im späteren Betriebseinsatz vorhandene Dichtigkeit aufweist. In diesem Zustand erfolgt dann eine Beaufschlagung des in der Kammer befindlichen Unterflurfeuers oder Geräts mit einem Indikatorgas, wie es vorstehend bereits ausführlich beschrieben worden ist.

Zweckmäßigerweise weist der erfindungsgemäße Prüfstand einen Drucker auf, mittels dem für jedes Unterflurfeuer oder Gerät ein Meßprotokoll erstellt werden kann.

Ein dem erfindungsgemäßen Prüfverfahren unterzogenes Unterflurfeuer oder anderes auf Flughäfen oder zur Straßenbeleuchtung eingesetztes abdichtungskritisches Gerät hat vorzugsweise eine mittels einer Entlüftungsschraube dicht schließbare Entlüftungsöffnung; darüber hinaus wird das Gerät oder Unterflurfeuer nach Durchführung des Prüfungsverfahrens mit gereinigter und entfeuchteter Normalluft gefüllt, bevor es zur Auslieferung verpackt wird.

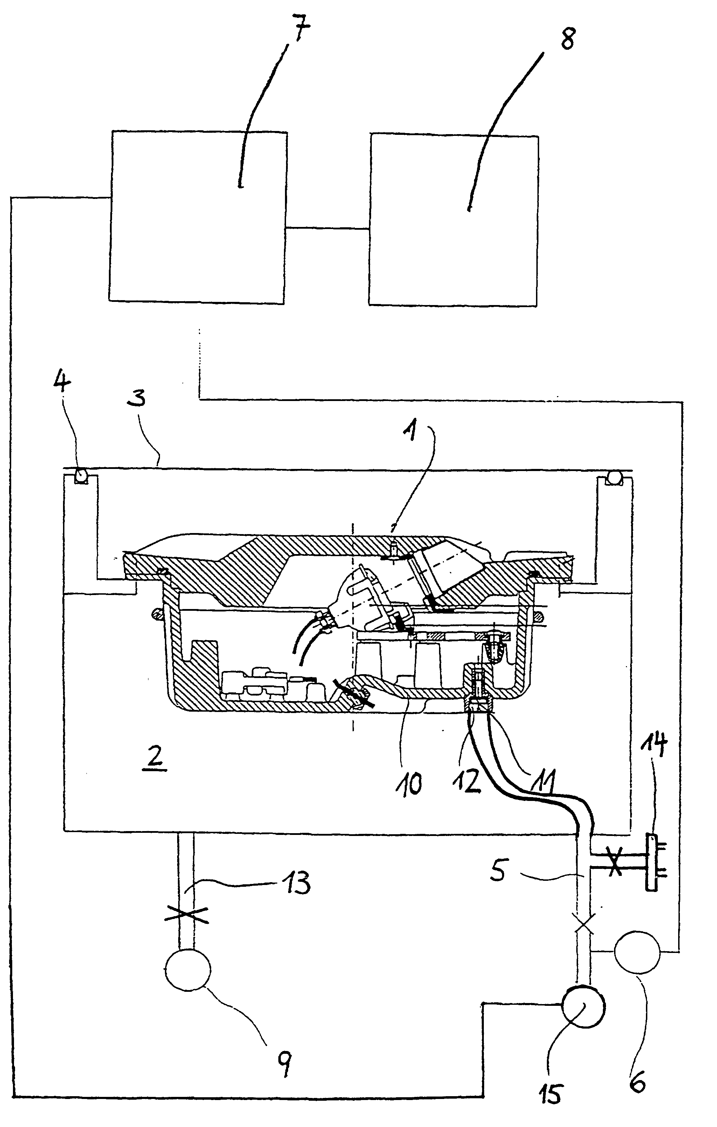

Im folgenden wird die Erfindung an Hand einer Ausführungsform unter Bezugnahme auf die Zeichnung näher dargestellt, in der prinzipiell ein Prüfstand zur Ermittlung der Dichtigkeit eines Unterflurfeuers dargestellt ist.

Der erfindungsgemäße Prüfstand bzw. das erfindungsgemäße Prüfverfahren dient dazu, die Dichtigkeit von Unterflurfeuern oder anderen auf Flughäfen oder zur Straßenbeleuchtung eingesetzten abdichtungskritischen Geräten zu überprüfen und für jedes überprüfte Gerät ein Meßprotokoll zur Verfügung zu stellen, aus dem hervorgeht, wie die Dichtigkeitseigenschaften des betreffenden Unterflurfeuers bzw. Geräts sind. Im folgenden werden das erfindungsgemäße Verfahren sowie der erfindungsgemäße Prüfstand im Zusammenhang mit einem Unterflurfeuer 1 beschrieben.

Zum Prüfstand gehört eine Kammer 2, in der das Unterflurfeuer 1 aufnehmbar ist. Die Kammer 2 ist mittels eines Deckels 3, der auf einem an der oberen Stirnseite der Kammer 2 vorgesehenen Dichtungsring 4 aufliegt, druckdicht verschließbar.

Des weiteren ist das Unterflurfeuer 1 über eine Leitung 5 und eine Entlüftungsöffnung 11 an eine Pumpe 6 angeschlossen. Mittels der Pumpe 6 ist das Unterflurfeuer 1 evakuierbar, und zwar, im dargestellten Ausführungsbeispiel, vorzugsweise bis auf einen Unterdruck von 0,01 Torr.

Des weiteren kann die Kammer 2 durch eine Leitung 13 mit einem Indikatorgas beaufschlagt werden, wobei im Falle des erfindungsgemäßen Prüfverfahrens bzw. bei dem erfindungsgemäßen Prüfstand vorzugsweise Helium als Indikatorgas zum Einsatz kommt.

Die Pumpe 6 wird von einer zentralen Steuereinheit, bei der es sich z.B. um einen PC 7 mit in der Figur nicht dargestelltem Bildschirm etc. handeln kann, gesteuert.

Der PC 7 ist an einen Drucker 8 angeschlossen, so daß am PC 7 registrierte Prüfvorgänge in Form von Meßprotokollen ausgegeben werden können.

Zu dem Prüfstand gehört ein an das Unterflurfeuer 1 angeschlossener Druckmesser, dessen Meßsignal ebenfalls an den PC 7 weitergegeben wird.

Das in der einzigen Figur dargestellte Unterflurfeuer 1 hat ein Gehäuse 10, welches - im dargestellten Ausführungsbeispiel - an der Unterseite die Entlüftungsöffnung 11 aufweist, die ihrerseits mittels einer in der einzigen Figur bereits in der Entlüftungsöffnung 11 dargestellten Entlüftungsschraube 12 dicht verschließbar ist.

Zur Überprüfung des Unterflurfeuers 1 hinsichtlich seiner Dichtigkeit wird das Unterflurfeuer 1 in die Kammer 2 des Prüfstands verbracht. Daraufhin wird die Kammer 2 des Prüfstands mittels des Deckels 3 druckdicht verschlossen.

Mittels einer in der Figur nicht dargestellten Handhabe wird die Entlüftungsschraube 12 aus der Entlüftungsöffnung 11 des Gehäuses 10 des Unterflurfeuers 1 entfernt.

Daraufhin wird der Innenraum des Unterflurfeuers 1 evakuiert, und zwar bis auf ein Unterdruckniveau von 0,01 Torr (Absolutdruck).

Daraufhin wird durch die Leitung 13 als Indikatorgas Helium in das Innere der Kammer 2 eingeführt, und zwar vorzugsweise mit einem Druck von etwa 0,3 bar (auch normaler Atmosphärendruck).

Der gesamte Prüfvorgang wird im PC 7 überwacht und gesteuert. Mittels des Druckers 8 wird für jedes Unterflurfeuer 1 ein Meßprotokoll erstellt, aus dem hervorgeht, welche Dichtigkeitseigenschaften das betreffende Unterflurfeuer 1 aufweist.

Am Ende der Dichtigkeitsprüfung wird die Zufuhr des Indikatorgases durch die Leitung 13, die an eine Indikatorgasquelle mit Druckmesser 9 angeschlossen ist, unterbrochen; der Unterdruck in der Leitung 5 wird abgestellt und trockene Frischluft wird in das Unterflurfeuer 1 durch einen Filter 14 eingeleitet. Daraufhin wird die Entlüftungsschraube 12 in die Entlüftungsöffnung 11 eingeschraubt, bevor das Unterflurfeuer 1 eingepackt wird.

Zur Erfassung der Molekularmasse ist ein an den PC 7 angeschlossener Molekularmassendetektor 15 vorgesehen. Der Filter 14, die Pumpe 6 und der Molekularmassendetektor 15 können eine Geräteeinheit bilden.

An dieser Stelle sei noch einmal darauf hingewiesen, daß anstelle des Unterflurfeuers 1 auch ein anderes, im Bereich eines Flughafens zum Einsatz kommendes Gerät, dessen Dichtigkeitseigenschaften kritisch sind, geprüft werden kann.

## Patentansprüche

1. Verfahren zur Ermittlung der Dichtigkeit von Unterflurfeuern (1) oder anderen auf Flughäfen oder zur Straßenbeleuchtung eingesetzten abdichtungskritischen Geräten, **dadurch gekennzeichnet, daß** der Innenraum eines Unterflurfeuers (1) oder Geräts einem Unterdruck ausgesetzt wird, daß nach Erreichen eines vorgebbaren Unterdruckniveaus die Umgebung des Unterflurfeuers (1) oder Geräts mit einem Indikatorgas beaufschlagt wird und daß die Menge des in das Unterflurfeuer (1) oder Geräts eindringenden Indikatorgases in Abhängigkeit von der Zeit gemessen wird.

2. Verfahren nach Anspruch 1, bei dem der Unterdruck bis auf ein Niveau von ca. 0,01 Torr Absolutdruck aufgebaut wird.

3. Verfahren nach Anspruch 1 oder 2, bei dem als Indikatorgas ein Gas mit einem Molekulardurchmesser eingesetzt wird, der kleiner als der von Sauerstoff und Wasser ist.

4. Verfahren nach Anspruch 3, bei dem als Indikatorgas Helium eingesetzt wird.

5. Verfahren nach Anspruch 3, bei dem als Indikatorgas Argon oder N2 eingesetzt wird.

6. Verfahren nach einem der Ansprüche 1 bis 5, bei dem das Indikatorgas mit einem niedrigen Druck, z.B. von ca. 0,3 bar Umgebungsdruck, an das unter Unterdruck gesetzte Unterflurfeuer (1) oder Gerät angelegt wird.

7. Verfahren nach einem der Ansprüche 1 bis 6, bei dem die Masse des sich in der Umgebung des Unterflurfeuers (1) oder Geräts befindlichen Indikatorgases in Abhängigkeit von der Zeit erfaßt wird.

8. Verfahren nach Anspruch 7, bei dem zur Erfassung der Masse des sich in der Umgebung des Unterflurfeuers (1) oder Geräts befindlichen Indikatorgases ein Molekularmassendetektor eingesetzt wird.

9. Verfahren nach Anspruch 8, bei dem der Molekularmassendetektor auf die Molekularmasse 4 von Helium eingestellt wird.

10. Verfahren nach einem der Ansprüche 1 bis 9, bei dem für jedes Unterflurfeuer (1) oder Gerät ein Meßprotokoll bezüglich des Druckabfalls des die Umgebung des Unterflurfeuers (1) bzw. des Geräts beaufschlagenden Indikatorgases erstellt wird.

11. Verfahren nach einem der Ansprüche 1 bis 10, nach dem jedes Unterflurfeuer (1) oder Gerät mit Normalluft gefüllt wird.

12. Verfahren nach Anspruch 11, bei dem die das Unterflurfeuer (1) oder das Gerät füllende Normalluft einen Aktivkohlefilter durchströmt.

13. Prüfstand zur Ermittlung der Dichtigkeit von Unterflurfeuern (1) oder anderen auf Flughäfen oder zur Straßenbeleuchtung eingesetzten abdichtungskritischen Geräten, mit einer Kammer (2), in der ein Unterflurfeuer (1) oder Gerät aufnehmbar und in die ein Indikatorgas einleitbar ist, einer Pumpe (6), mittels der der Innenraum des Unterflurfeuers (1) oder Geräts mit Unterdruck beaufschlagbar ist, und einem Druckmesser, mittels dem der Druck innerhalb des Unterflurfeuers (1) oder Geräts der Kammer (2) erfaßbar ist.

14. Prüfstand nach Anspruch 13, mit einer Handhabe, mittels der eine Entlüftungsschraube (12) des Unterflurfeuers (1) o-der Geräts aus einer Entlüftungsöffnung (11) im Gehäuse (10) desselben heraus- und in diese hineinschraubbar ist.

15. Prüfstand nach Anspruch 13 oder 14, mit einem Drucker (8), mittels dem für jedes Unterflurfeuer (1) oder Gerät ein Meßprotokoll erstellbar ist.

## Claims

1. Method for leak testing of flush-marker lights (1) or other sealing-critical units used at airports or for street lighting, **characterized in that** the interior of a flush-marker light (1) or unit is subjected to a partial vacuum, **in that** an indicator gas is supplied to the surroundings of the flush-marker light (1) after a prescribed partial vacuum level has been reached, and **in that** the quantity of the indicator gas penetrating into the flush-marker light (1) or unit is measured as a function of time.

2. Method according to Claim 1, in which the partial vacuum is built up to an absolute pressure level of approximately 0.01 torr.

3. Method according to Claim 1 or 2, in which use is made as indicator gas of a gas having a molecular diameter which is smaller than that of oxygen and water.

4. Method according to Claim 3, in which helium is used as indicator gas.

5. Method according to Claim 3, in which argon or N2 is used as indicator gas.

6. Method according to one of Claims 1 to 5, in which the indicator gas is applied with a low pressure, for example ambient pressure of approximately 0.3 bar, to the flush-marker light (1) or unit placed under partial vacuum.

7. Method according to one of Claims 1 to 6, in which the mass of the indicator gas located in the surroundings of the flush-marker light (1) or unit is detected as a function of time.

8. Method according to Claim 7, in which a molecular mass detector is used to detect the mass of the indicator gas located in the surroundings of the flush-marker light (1) or unit.

9. Method according to Claim 8, in which the molecular mass detector is set to the molecular mass 4 of helium.

10. Method according to one of Claims 1 to 9, in which a test report referring to the pressure drop in the indicator gas applied to the surroundings of the flush-marker light (1) or unit is drawn up for each flush-marker light (1) or unit.

11. Method according to one of Claims 1 to 10, according to which each flush-marker light (1) or unit is filled with normal air.

12. Method according to Claim 11, in which the normal air filling the flush-marker light (1) or the unit flows through an activated charcoal filter.

13. Test stand for leak testing of flush-marker lights (1) or other sealing-critical units used at airports or for street lighting, having a chamber (2) in which a flush-marker light (1) or unit can be held and into which an indicator gas can be introduced, a pump (6) by means of which a partial vacuum can be applied to the interior of the flush-marker light (1) or unit, and a vacuum gauge by means of which the pressure inside the flush-marker light (1) or unit of the chamber (2) can be detected.

14. Test stand according to Claim 13, having a handle by means of which a vent screw (12) of the flush-marker light (1) or unit can be screwed out of and into a vent opening (11) in the housing (10) of the said flush-marker light or unit.

15. Test stand according to Claim 13 or 14, having a printer (8) by means of which a test report can be drawn up for each flush-marker light (1) or unit.

## Revendications

1. Procédé de détermination de l'étanchéité de plots lumineux encastrés ou d'autres appareils dont l'étanchéité est cruciale et qui sont utilisés sur des aérodromes ou pour l'éclairage des rues, **caractérisé en ce que** l'on soumet l'espace intérieur d'un plot lumineux encastré (1) ou d'un appareil à une dépression, **en ce qu'**après qu'un niveau de dépression qui peut être prédéterminé a été atteint, on alimente l'environnement du plot lumineux encastré (1) ou de l'appareil en un gaz indicateur et **en ce que** l'on mesure la quantité du gaz indicateur pénétrant dans le plot lumineux encastré (1) ou dans l'appareil en fonction du temps.

2. Procédé selon la revendication 1, dans lequel on établit la dépression jusqu'à un niveau de pression absolue de 0,01 Torr environ.

3. Procédé selon la revendication 1 ou 2, dans lequel on utilise comme gaz indicateur un gaz dont le diamètre moléculaire est inférieur à celui de l'oxygène et de l'eau.

4. Procédé selon la revendication 3, dans lequel on utilise comme gaz indicateur de l'hélium.

5. Procédé selon la revendication 3, dans lequel on utilise comme gaz indicateur de l'argon ou du N₂.

6. Procédé selon l'une des revendications 1 à 5, dans lequel le gaz indicateur est appliqué avec une faible pression, par exemple une pression ambiante de 0,3 bar environ, sur le plot lumineux encastré (1) ou l'appareil mis sous dépression.

7. Procédé selon l'une des revendications 1 à 6, dans lequel on mesure la masse du gaz indicateur se trouvant dans l'environnement du plot lumineux encastré (1) ou de l'appareil en fonction du temps.

8. Procédé selon la revendication 7, dans lequel on utilise un détecteur de masse moléculaire pour mesurer la masse du gaz indicateur se trouvant dans l'environnement du plot lumineux encastré (1) ou de l'appareil.

9. Procédé selon la revendication 8, dans lequel on règle le détecteur de masse moléculaire sur la masse moléculaire 4 de l'hélium.

10. Procédé selon l'une des revendications 1 à 9, dans lequel ont établit pour chaque plot lumineux encastré (1) ou appareil un protocole de mesure relatif à la chute de pression du gaz indicateur alimentant l'environnement du plot lumineux encastré (1) ou de l'appareil.

11. Procédé selon l'une des revendications 1 à 10, dans lequel chaque plot lumineux encastré (1) ou chaque appareil est rempli d'air normal.

12. Procédé selon la revendication 11, dans lequel l'air normal remplissant le plot lumineux encastré (1) ou l'appareil passe à travers un filtre au charbon actif.

13. Banc d'essai pour déterminer l'étanchéité de plots lumineux encastrés (1) ou d'autres appareils dont l'étanchéité est cruciale et qui sont utilisés sur des aérodromes ou pour l'éclairage des rues, comportant
une chambre (2) dans laquelle peut être logé un plot lumineux encastré (1) ou un appareil et dans laquelle peut être introduite un gaz indicateur, une pompe (6) permettant de mettre l'espace intérieur du plot lumineux encastré (1) ou de l'appareil sous dépression, et un manomètre permettant de mesurer la pression à l'intérieur du plot lumineux encastré (1) ou de l'appareil placé dans la chambre (3).

14. Banc d'essai selon la revendication 13, qui comporte une manette permettant de visser ou de dévisser une vis de purge (12) du plot lumineux encastré (1) ou de l'appareil dans une ouverture de purge (11) ménagée dans le boîtier du feu ou appareil.

15. Banc d'essai selon la revendication 13 ou 14, qui comporte un appareil d'impression (8) permettant d'établir un protocole de mesure pour chaque plot lumineux encastré (1) ou appareil.
